(19) Europäisches Patentamt
European Patent Office
Office européen des brevets

(11) **EP 4 787 235 A1**

(12) **EUROPEAN PATENT APPLICATION**
published in accordance with Art. 153(4) EPC

(43) Date of publication:
05.08.2026 Bulletin 2026/32

(21) Application number: 24870516.2

(22) Date of filing: 18.09.2024

(51) International Patent Classification (IPC):
*G06N 3/0455* (2023.01)

(52) Cooperative Patent Classification (CPC):
G06F 40/35; G06N 3/0455; G06N 3/0464;
G06N 3/048; G06N 3/08; G06N 3/084; G06N 3/092

(86) International application number:
PCT/CN2024/119317

(87) International publication number:
WO 2025/066972 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.09.2023 CN 202311245582

(71) Applicant: HUAWEI TECHNOLOGIES CO., LTD.
Shenzhen 518129 (CN)

(72) Inventors:
• HUANG, Wenyong
Shenzhen, Guangdong 518129 (CN)
• ZHONG, Wanjun
Shenzhen, Guangdong 518129 (CN)

• SHANG, Lifeng
Shenzhen, Guangdong 518129 (CN)
• MI, Fei
Shenzhen, Guangdong 518129 (CN)
• WANG, Baojun
Shenzhen, Guangdong 518129 (CN)
• WANG, Weichao
Shenzhen, Guangdong 518129 (CN)
• WANG, Yufei
Shenzhen, Guangdong 518129 (CN)
• ZENG, Xingshan
Shenzhen, Guangdong 518129 (CN)

(74) Representative: Gill Jennings & Every LLP
The Broadgate Tower
20 Primrose Street
London EC2A 2ES (GB)

(54) **DATA PROCESSING METHOD AND DEVICE**

(57) A data processing method is provided, applied to the field of text generation. The method includes: obtaining a first prompt; obtaining a first output by using a first LLM based on the first prompt; constructing a second prompt based on the first output and the first prompt, where the second prompt indicates to improve the first output when the first prompt is determined as a prompt; and obtaining a second output by using the first LLM based on the second prompt, where the second output is an improved first output. In this application, self-learning and evolution can be implemented based on an output self-correction process of the LLM without completely depending on human supervision, or a more accurate reply can be obtained for a highly complex task.

FIG. 5

EP 4 787 235 A1

**Description**

This application claims priority to Chinese Patent Application No. 202311245582.5, filed with the China National Intellectual Property Administration on September 25, 2023 and entitled "DATA PROCESSING METHOD AND APPARATUS", which is incorporated herein by reference in its entirety.

**TECHNICAL FIELD**

This application relates to the field of artificial intelligence, and in particular, to a data processing method and apparatus.

**BACKGROUND**

Artificial intelligence (Artificial Intelligence, AI) is a theory, a method, a technology, and an application system in which human intelligence is simulated, extended, and expanded by using a digital computer or a machine controlled by a digital computer, to perceive an environment, obtain knowledge, and obtain an optimal result by using the knowledge. In other words, artificial intelligence is a branch of computer science, and is intended to understand essence of intelligence and produce a new intelligent machine that can react in a manner similar to human intelligence. Artificial intelligence is to study design principles and implementation methods of various intelligent machines, to enable the machines to have perception, inference, and decision-making functions.

Large language models, such as GPT (generative pre-trained transformer) of OpenAI, show their advantages in processing various tasks, including translation, question answering, and text generation. Training of the large language models usually involves two phases: pre-training and fine-tuning. In the pre-training phase, the models are trained on a large amount of unlabeled text data. For example, "next word prediction" is used as a pre-training task, a word sequence (for example, "today") is given, and the models are asked to predict a next word (for example, "weather"). In this way, the models learn usage of natural language and various common sense, thus providing a powerful foundation for various applications.

Fine-tuning and alignment of large language models: Models that have been pre-trained often generate false, harmful, or unhelpful content. Therefore, the models need to be fine-tuned to ensure that outputs of the models meet human requirements. This is usually done through supervised training on labeled datasets, that is, supervised fine-tuning (supervised fine-tuning, SFT).

However, supervised fine-tuning (SFT) relies on manually labeled data, and heavily relies on available labeled data, which may require a large amount of human resources.

Therefore, there is an urgent need to provide a supervised training method that is for language models and that does not depend on labeled samples.

**SUMMARY**

This application provides a data processing method that can implement self-learning and evolution without completely depending on human supervision, or obtain a more accurate reply for a highly complex task.

According to a first aspect, this application provides a data processing method, where the method includes: obtaining a first prompt; obtaining a first output by using a first LLM based on the first prompt; constructing a second prompt based on the first output and the first prompt, where the second prompt indicates to improve the first output when the first prompt is determined as a prompt; and obtaining a second output by using the first LLM based on the second prompt, where the second output is an improved first output.

Embodiments of this application provide a method for aligning and self-improving an LLM based on natural language feedback. Through a natural language-based model self-reflection (self-feedback and self-correction) process and a self-evolution (feedback data incentive learning) process, the model can implement self-learning and evolution, and does not completely depend on human supervision. Alternatively, for a very complex task, a more accurate reply can be obtained.

In a possible implementation, the method further includes: updating the first LLM based on the second output and the first prompt; outputting the second output as an inference result; or outputting the second output and the first prompt as a training sample.

In a possible implementation, obtaining the first output by using the first LLM based on the first prompt includes: obtaining the first output through a plurality of times of processing by using the first LLM based on the first prompt, where the first output includes an output obtained through each time of processing in the plurality of times of processing.

In a possible implementation, before obtaining the first output by using the first LLM based on the first prompt, the method further includes: obtaining a third prompt; obtaining a third output by using a second LLM based on the third prompt; obtaining a fourth output based on the third output and the third prompt, where the fourth output includes an improved third output, the fourth output is determined by using an LLM having an evaluation or improvement capability based on a fourth prompt, or the fourth output is an improvement that is for the third output and that is determined by an expert based on the third output and the third prompt, and the fourth prompt indicates to improve the third output when the third prompt is determined as a prompt; and training the second LLM by using the fourth output and the fourth prompt as a training sample, to obtain the first LLM.

In this system, the large language model can learn a process of evaluating and improving a reply, and understand human preferences and values.

In a possible implementation, the fourth prompt further indicates to evaluate the third output when the third prompt is determined as the prompt, and the fourth output further includes evaluation on the third output.

In a possible implementation, to improve accuracy of the first LLM in reply improvement, evaluation on the reply may be further constructed in the training sample, that is, content related to improvement in the training sample is enriched. Further, the fourth prompt further indicates to evaluate the third output when the third prompt is determined as the prompt, and the fourth output further includes evaluation on the third output.

In a possible implementation, obtaining the third output by using the second LLM based on the third prompt includes: obtaining the third output through a plurality of times of processing by using the second LLM based on the third prompt, where the third output includes an output obtained through each time of processing in the plurality of times of processing.

According to a second aspect, this application provides a data processing apparatus. The apparatus includes:

an obtaining module, configured to obtain a first prompt; and
a processing module, configured to: obtain a first output by using a first LLM based on the first prompt;
construct a second prompt based on the first output and the first prompt, where the second prompt indicates to improve the first output when the first prompt is determined as a prompt; and
obtain a second output by using the first LLM based on the second prompt, where the second output is an improved first output.

In a possible implementation, the processing module is further configured to:

update the first LLM based on the second output and the first prompt;
output the second output as an inference result; or
output the second output and the first prompt as a training sample.

In a possible implementation, the processing module is specifically configured to:
obtain the first output through a plurality of times of processing by using the first LLM based on the first prompt, where the first output includes an output obtained through each time of processing in the plurality of times of processing.

In a possible implementation, before obtaining the first output by using the first LLM based on the first prompt, the obtaining module is further configured to:

obtain a third prompt; and
the processing module is further configured to:

obtain a third output by using a second LLM based on the third prompt;
obtain a fourth output based on the third output and the third prompt, where the fourth output includes an improved third output, the fourth output is determined by using an LLM having an evaluation or improvement capability based on a fourth prompt, or the fourth output is an improvement that is for the third output and that is determined by an expert based on the third output and the third prompt, and the fourth prompt indicates to improve the third output when the third prompt is determined as a prompt; and
train the second LLM by using the fourth output and the fourth prompt as a training sample, to obtain the first LLM.

In a possible implementation, the fourth prompt further indicates to evaluate the third output when the third prompt is determined as the prompt, and the fourth output further includes evaluation on the third output.

In a possible implementation, the processing module is specifically configured to:
obtain the third output through a plurality of times of processing by using the second LLM based on the third prompt, where the third output includes an output obtained through each time of processing in the plurality of times of processing.

According to a third aspect, an embodiment of this application provides a data processing apparatus, which may include a memory, a processor, and a bus system. The memory is configured to store a program, and the processor is configured to execute the program in the memory, to perform the method according to any one of the first aspect and the optional implementations of the first aspect.

According to a fourth aspect, an embodiment of this application provides a computer-readable storage medium. The computer-readable storage medium stores a computer program. When the computer program is run on a computer, the computer is enabled to perform the method according to any one of the first aspect and the optional implementations of the first aspect.

According to a fifth aspect, an embodiment of this application provides a computer program. When the computer program is run on a computer, the computer is enabled to perform the method according to any one of the first aspect and the optional implementations of the first aspect.

According to a sixth aspect, this application provides a chip system. The chip system includes a processor, configured to support the data processing apparatus in implementing the functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

**BRIEF DESCRIPTION OF DRAWINGS**

FIG. 1A is a diagram of a structure of an artificial intelligence main framework;
FIG. 1B and FIG. 1C each are a diagram of an application system framework according to this application;
FIG. 1D is a diagram of an optional hardware structure of a terminal;
FIG. 2 is a diagram of a structure of a server;
FIG. 3 is a diagram of a system architecture according to this application;
FIG. 4 shows a cloud service procedure;
FIG. 5 is a schematic flowchart of a data processing method according to an embodiment of this application;
FIG. 6 is a schematic flowchart of a data processing method according to an embodiment of this application;
FIG. 7A and FIG. 7B are a schematic flowchart of a data processing method according to an embodiment of this application;
FIG. 8 is a diagram of a structure of a data processing apparatus according to an embodiment of this application;
FIG. 9 is a diagram of a structure of an execution device according to an embodiment of this application;
FIG. 10 is a diagram of a structure of a training device according to an embodiment of this application; and
FIG. 11 is a diagram of a structure of a chip according to an embodiment of this application.

**DESCRIPTION OF EMBODIMENTS**

The following describes embodiments of this application with reference to the accompanying drawings in embodiments of this application. Terms used in embodiments of this application are only used to explain specific embodiments of this application, but are not intended to limit this application.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The terms "substantially (substantially)", "about (about)", and the like used in this specification are approximation terms rather than degree terms, and are intended to take into account inherent deviations of measured values or calculated values that are known to a person of ordinary skill in the art. In addition, when embodiments of this application are described, "may (may)" means "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (example)" is intended to indicate an example or an illustration.

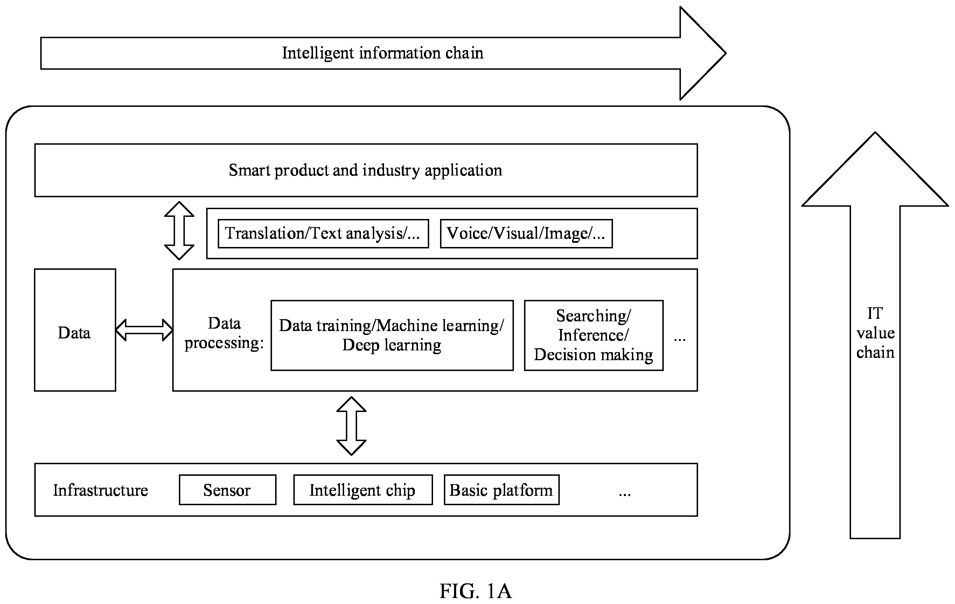

First, an overall operation process of an artificial intelligence system is described. FIG. 1A is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects benefits brought by artificial intelligence to the information technology industry that go throughout an industrial ecological process from an underlying infrastructure and information (providing and technology-based processing) of artificial intelligence to an artificial intelligence system.

(1) Infrastructure

The infrastructure provides computing capability support for the artificial intelligence system, implements communication with the external world, and implements support by using a basic platform. The infrastructure communicates with the outside through a sensor. A computing capability is provided by an intelligent chip (a hardware acceleration chip a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formalized information according to an inference control policy. A typical function is searching and matching.

Decision-making is a process of making a decision after intelligent information is inferred, and usually provides functions such as classification, ranking, and prediction.

(4) General capability

After data processing mentioned above is performed on data, some general capabilities may further be formed based on a data processing result. For example, the general capability may be an algorithm or a general system, for example, translation, text analysis, computer vision processing, speech recognition, and image recognition.

(5) Smart product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent products and industry application mainly include intelligent terminals, intelligent transportation, intelligent health care, autonomous driving, smart cities, and the like.

This application may be applied to the field of text processing in the field of artificial intelligence. The following describes a plurality of application scenarios in which a plurality of functions are implemented in products by using text processing as an example.

An application scenario of this application is first described.

This application may be applied to an application (which may be referred to as a text generation application below) having a text generation function, a cloud service provided by a cloud server, or the like. The following separately describes the application.

1. Text generation application

A product form of embodiments of this application may be the text generation application. An application having a text generation function may run on a terminal device or a server on a cloud side.

In a possible implementation, the text generation application may implement a text generation task based on an input text generation request (or may be referred to as a prompt control instruction), to obtain a processing result, for example, a text generation result. When the prompt is a question, the text generation result may be a reply corresponding to the prompt.

The text generation request may indicate a generative task such as a summary, a dialog, question answering, or translation.

In a possible implementation, a user may start a text generation application installed on the terminal device, and input a text processing instruction. The text generation application may process the text processing instruction by using the method provided in embodiments of this application, and present a processing result to the user (a presentation manner may be, but is not limited to, displaying, saving, uploading to the cloud side, or the like).

In a possible implementation, the user may start the text generation application installed on the terminal device, and input a text processing instruction. The text generation application may send the text processing instruction to the server on the cloud side. The server on the cloud side processes the text processing instruction by using the method provided in embodiments of this application, and returns a processing result to the terminal device. The terminal device may present the processing result to the user (a presentation manner may be, but is not limited to, displaying, saving, uploading to the cloud side, or the like).

Optionally, input and output may occur on a paid dialog interface, a terminal application service that invokes a related interface, or a built-in function of the terminal device.

The following separately describes the text generation application in embodiments of this application from a functional architecture and a product architecture for implementing a function.

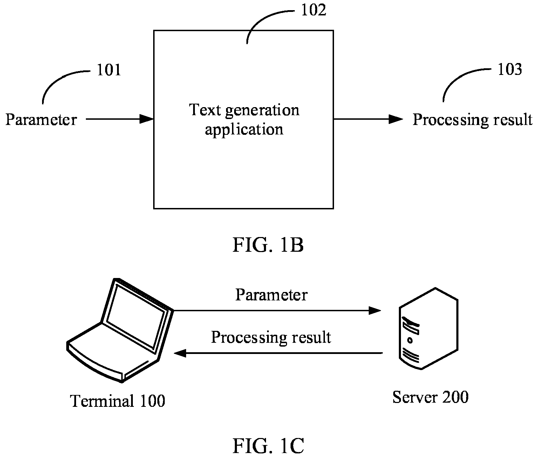

FIG. 1B is a diagram of a functional architecture of a text generation application according to an embodiment of this application.

In a possible implementation, as shown in FIG. 1B, a text generation application 102 may receive an input parameter 101 (for example, including a text processing instruction) and generate a processing result 103. The text generation application 102 may be executed on (for example) at least one computer system, and includes computer code. When the computer code is executed by one or more computers, a computer is enabled to perform the method provided in embodiments of this application.

FIG. 1C is a diagram of an entity architecture of running a text generation application according to an embodiment of this application.

FIG. 1C is a diagram of an architecture of a system. The system may include a terminal 100 and a server 200. The server 200 may include one or more servers (in FIG. 1C, an example in which the server 200 includes one server is used for description), and the server 200 may provide, for one or more terminals, the method provided in embodiments of this application.

A text generation application may be installed on the terminal 100. The application and a web page may provide an interface. The terminal 100 may receive a related parameter input by a user on a text generation interface, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter, without cooperation of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

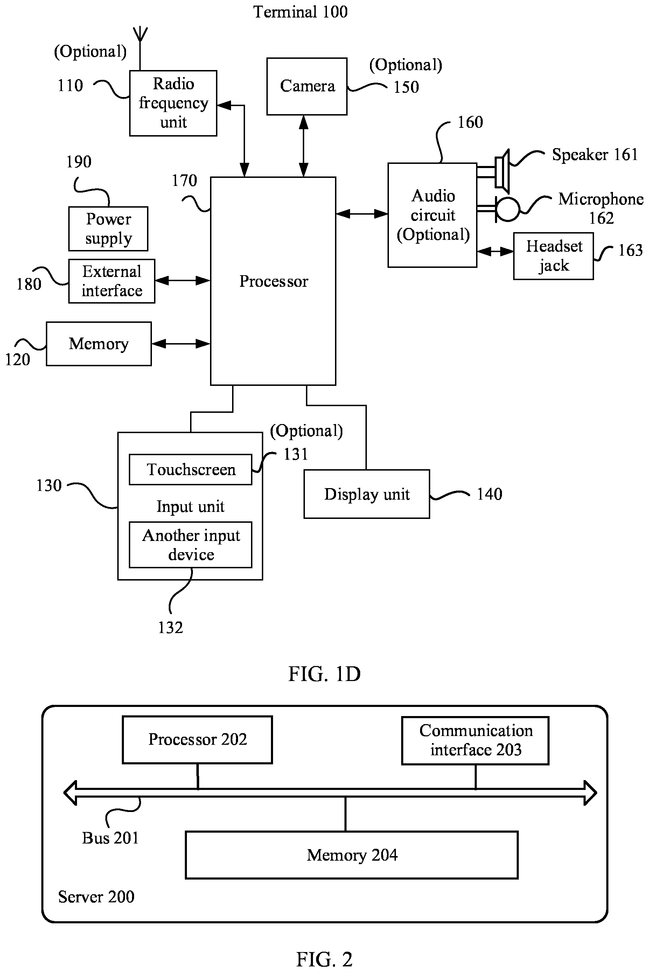

FIG. 1D is a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 1D is merely an example of the terminal or a multi-functional device but constitutes no limitation on the terminal or the multi-functional device. The terminal or the multi-functional device may include more or fewer components than those shown in the figure, may combine some components, or may use different components.

The input unit 130 may be configured to receive input digital or character information, and generate a key signal input related to a user setting and function control of the portable multi-functional apparatus. Specifically, the input unit 130 may include a touchscreen 131 (optional) and/or other input devices 132. The touchscreen 131 may collect a touch operation performed by a user on or near the touchscreen 131 (for example, an operation performed by the user on or near the touchscreen by using any proper object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may include the another input device. Specifically, the another input device 132 may include but is not limited to one or more of a physical keyboard, a functional button (for example, a volume control button or an on/off button), a trackball, a mouse, and a joystick.

The input device 132 may receive an input text processing instruction and the like.

The display unit 140 may be configured to display information input by the user, information provided for the user, various menus of the terminal 100, an interaction interface, a file, and/or playing of any multimedia file. In this embodiment of this application, the display unit 140 may be configured to display an interface, a processing result, and the like of the text generation application.

The memory 120 may be configured to store instructions and data. The memory 120 may mainly include an instruction storage area and a data storage area. The data storage area may store various types of data such as a multimedia file and text. The instruction storage area may store software units such as an operating system, an application, and instructions for at least one function, or subsets and extended sets thereof. The memory 120 may further include a non-volatile random access memory, and provide hardware, software, a data resource, and the like in a management and calculation processing device to the processor 170, to support control on software and an application. The memory 120 is further configured to: store a multimedia file, and run a program and store an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may not be integrated into the processor 170. In some embodiments, the processor and the memory may be implemented on a single chip. In other embodiments, the processor and the memory may be implemented on separate chips. The processor 170 may be further configured to: generate a corresponding operation control signal, and send the operation control signal to a corresponding component in the calculation processing device, and read and process data in software, especially read and process the data and the program in the memory 120, so that function modules perform corresponding functions, to control a corresponding component to perform an operation as required by an instruction.

The memory 120 may be configured to store software code related to the data processing method, and the processor 170 may perform steps of the data processing method of the chip, or may schedule another unit (for example, the input unit 130 and the display unit 140) to implement a corresponding function.

The radio frequency unit 110 (optional) may be configured to send and receive signals in an information sending/receiving process or a call process, for example, receive downlink information from a base station and then send the downlink information to the processor 170 for processing, or send uplink-related data to a base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communication (Global System for Mobile Communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In this embodiment of this application, the radio frequency unit 110 may send the text processing instruction to the server 200, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as charging and discharging management and power consumption management through the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used in FIG. 2 for representation, but this does not mean that there is only one bus or only one type of bus.

The processor 202 may be any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to the data processing method, and the processor 202 may perform steps of the data processing method of the chip, or may schedule another unit to implement a corresponding function.

It should be understood that the terminal 100 and the server 200 may be central or distributed devices. A processor (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

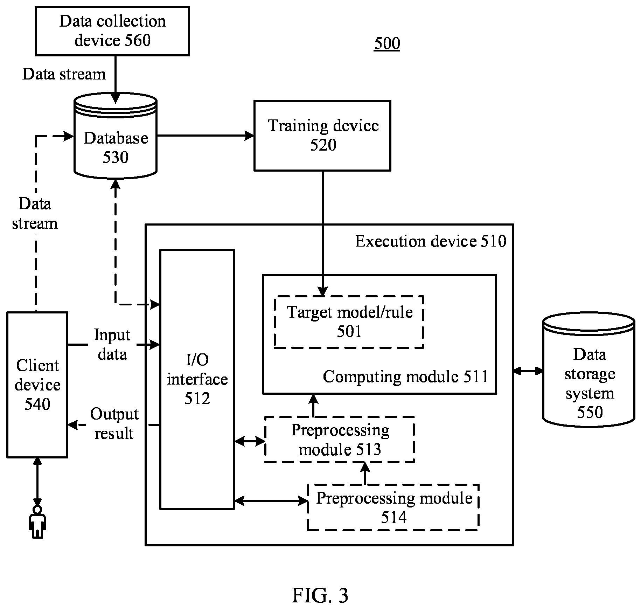

It should be understood that steps related to a model inference process in embodiments of this application relate to an AI-related operation. When the AI operation is performed, an instruction execution architecture of the terminal device and the server is not limited to the foregoing architecture in which the processor and the memory are combined. The system architecture provided in embodiments of this application is described in detail below with reference to FIG. 3.

FIG. 3 is a diagram of the system architecture according to an embodiment of this application. As shown in FIG. 3, a system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501. The preprocessing module 513 and the preprocessing module 514 are optional.

The execution device 510 may be a terminal device or a server that runs a text generation application.

The data collection device 560 is configured to collect a training sample. After collecting the training sample, the data collection device 560 stores the training sample in the database 530.

The training device 520 may maintain the training sample in the database 530, and pre-train a to-be-trained neural network (for example, a language model in embodiments of this application) to obtain the target model/rule 501.

It should be understood that the training device 520 may perform a pre-training process on the to-be-trained neural network based on the training sample maintained in the database 530, or perform fine-tuning on a model based on pre-training.

It should be noted that in an actual application, the training sample maintained in the database 530 is not necessarily collected by the data collection device 560, and may be received from another device. In addition, it should be noted that the training device 520 does not necessarily train the target model/rule 501 based only on the training sample maintained in the database 530, and may obtain a training sample from a cloud or another place for model training. The foregoing descriptions should not be construed as a limitation on embodiments of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal, or may be a server or the like.

Specifically, the training device 520 may transfer a trained model to the execution device 510.

In FIG. 3, the execution device 510 is configured with the input/output (input/output, I/O) interface 512, configured to exchange data with an external device. The user may input data (for example, a text processing instruction in embodiments of this application) to the I/O interface 512 through a client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the input data may be processed by directly using the computing module 511.

When the execution device 510 preprocesses the input data, or when the computing module 511 in the execution device 510 performs a related processing process such as calculation, the execution device 510 may invoke data, code, and the like in the data storage system 550 for corresponding processing, or may store data, instructions, and the like obtained through corresponding processing in the data storage system 550.

Finally, the I/O interface 512 provides a processing result for the client device 540, to provide the processing result for the user.

In the case shown in FIG. 3, the user may manually provide input data, and an operation may be performed on the "manually provided input data" on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection terminal, to collect the input data that is input to the I/O interface 512 and that is shown in the figure and the output result output from the I/O interface 512, use the input data and the output result as new sample data, and store the new sample data in the database 530. Certainly, collection may alternatively be performed without using the client device 540, and the I/O interface 512 directly uses the input data that is input to the I/O interface 512 and that is shown in the figure and the output result output from the I/O interface 512 as new sample data, and stores the new sample data in the database 530.

It should be noted that FIG. 3 is merely a diagram of the system architecture according to an embodiment of this application. A location relationship between a device, a component, a module, and the like shown in the figure constitutes no limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows:
In embodiments of this application, the computing module 511 in the execution device 510 may obtain the code stored in the data storage system 550, to implement steps related to a model inference process in embodiments of this application.

In embodiments of this application, the computing module 511 in the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

Specifically, the computing module 511 in the execution device 510 may be a hardware system with an instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 in the execution device 510 may be a combination of a hardware system without an instruction execution function and a hardware system with an instruction execution function. Some of the steps related to the model inference process provided in embodiments of this application may be implemented by the hardware system without an instruction execution function in the computing module 511 in the execution device 510. This is not limited herein.

Details from a perspective of model training are as follows:

In embodiments of this application, the training device 520 may obtain code stored in a memory (which is not shown in FIG. 3, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that the training device 520 may be a combination of a hardware system without an instruction execution function and a hardware system with an instruction execution function. Some of the steps related to model training provided in embodiments of this application may be implemented by the hardware system without an instruction execution function in the training device 520. This is not limited herein.

2. Text generation cloud services provided by a server:

In a possible implementation, the server may provide a text generation service for a terminal side through an application programming interface (application programming interface, API).

A terminal device may send a related parameter (for example, a text processing instruction) to the server through the API provided by the cloud, and the server may obtain a processing result and the like based on the received parameter, and return the processing result to the terminal.

For descriptions of the terminal and the server, refer to the descriptions in the foregoing embodiments. Details are not described herein again.

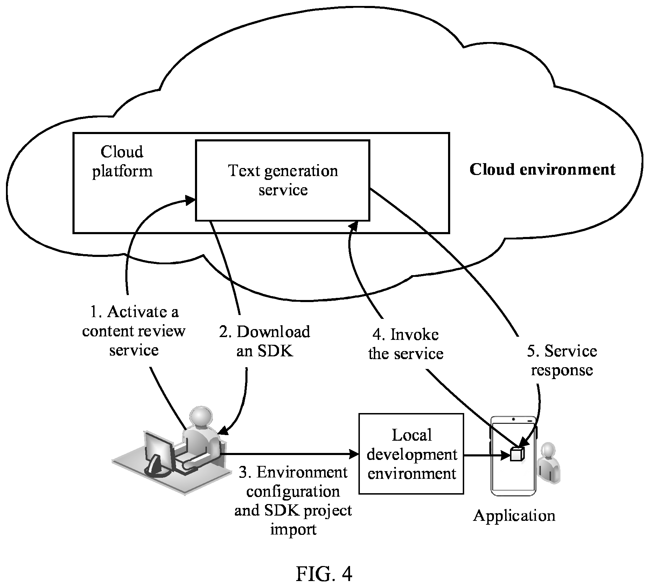

FIG. 4 shows a procedure of using a text generation cloud service provided by a cloud platform.

(1). Activate and purchase a content review service.

(2). A user may download a software development kit (software development kit, SDK) corresponding to the content review service. Usually, the cloud platform provides SDKs of a plurality of development versions for the user to select based on a development environment requirement, for example, a Java-version SDK, a Python-version SDK, a PHP-version SDK, and an Android-version SDK.

(3). After locally downloading an SDK of a corresponding version based on the requirement, the user imports an SDK project to a local development environment, and performs configuration and debugging in the local development environment. Another function may be further developed in the local development environment, to form an application that integrates a text generation capability.

(4). When the text generation application is used, an API invocation for text generation may be triggered when a text needs to be generated. When triggering the text generation function is triggered, the application initiates an API request to a running instance of a text generation service in a cloud environment, where the API request carries a text processing instruction, and the running instance in the cloud environment processes the text processing instruction to obtain a processing result.

(5). The cloud environment returns the processing result to the application, to complete one invocation of the method provided in embodiments of this application.

3. Training sample generation cloud services provided by a server:

In a possible implementation, the server may provide a text generation service for a terminal side through an application programming interface (application programming interface, API).

A terminal device may send a related parameter (for example, an existing training sample with a missing label) to the server through an API provided by a cloud, and the server may obtain a processing result (for example, a supplementing label of the training sample) and the like based on the received parameter, and return the processing result to the terminal.

For descriptions of the terminal and the server, refer to the descriptions in the foregoing embodiments. Details are not described herein again.

FIG. 4 shows a procedure of using a training sample generation cloud service provided by a cloud platform.

(1). Activate and purchase a content review service.

(2). A user may download a software development kit (software development kit, SDK) corresponding to the content review service. Usually, the cloud platform provides SDKs of a plurality of development versions for the user to select based on a development environment requirement, for example, a Java-version SDK, a Python-version SDK, a PHP-version SDK, and an Android-version SDK.

(3). After locally downloading an SDK of a corresponding version based on the requirement, the user imports an SDK project to a local development environment, and performs configuration and debugging in the local development environment. Another function may be further developed in the local development environment, to form an application that integrates a training sample generation capability.

(4). When the training sample generation application is in use, an API invocation for training sample generation may be triggered when a training sample needs to be generated. When triggering the training sample generation function, the application initiates an API request to a running instance of a training sample generation service in a cloud environment, where the API request carries a training sample generation instruction, and the running instance in the cloud environment processes the training sample generation instruction to obtain a processing result.

(5). The cloud environment returns the processing result to the application, to complete one invocation of the method provided in embodiments of this application.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^{T}x\right) = f(\sum\nolimits_{s=1}^{n} W_s x_s + b).$$

Herein, s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. In short, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, only such a simple operation is performed on the input vector $\vec{x}$ to obtain the output vector $\vec{y}$. Because the DNN includes a large quantity of layers, there are a large quantity of coefficients W and a large quantity of offset vectors b. Definitions of these parameters in the DNN are as follows: The coefficient W is used as an example. It is assumed that in a three-layer DNN, a linear coefficient from a fourth neuron at a second layer to a second neuron at a third layer is defined as $W_{24}^{3}$. The superscript 3 represents the layer where the coefficient W is located, and the subscript corresponds to an output third-layer index 2 and an input second-layer index 4. In conclusion, a coefficient from the $k^{th}$ neuron at the $(L-1)^{th}$ layer to the $j^{th}$ neuron at the $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

(4) Loss function

In a process of training a deep neural network, because it is expected that an output of the deep neural network is maximally close to an actually predicted value, a current predicted value of the network may be compared with a target value that is expected, and then a weight vector at each layer of the neural network is updated based on a difference between the current predicted value and the target value (there is usually an initialization process before the first update, in other words, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(5) Prompt: indicates a template or prompt information used to define downstream tasks. When being input into a model, the prompt can help the model better identify the task to be processed.

(6) Large language model (large language model, LLM)

The large language model is an artificial intelligence algorithm, which is a neural network-based language model with a large quantity of parameters pre-trained based on massive text data.

(7) Labeled data (labeled data)

The labeled data refers to data that is labeled with the target task. For example, for a dialog system, the labeled data is text data organized in a dialog form.

(8) Pre-training (pre-training)

A method of training by using labeled data is referred to as a supervised learning (supervised learning) method, and a method of training by using unlabeled data is referred to as a self-supervised learning (self-supervised learning) method or an unsupervised learning (unsupervised learning) method. To use both labeled and unlabeled data, a common method is to first use the unlabeled data and the self-supervised learning method to train a model. This step is referred to as pre-training (pre-train). Then, based on the pre-trained model, the labeled data is used to further train the model through supervised learning. This step is referred to as fine-tuning (fine-tune).

(9) Supervised learning (supervised learning)

Supervised learning refers to a method of training a model using the labeled data. A training objective is to enable the model to predict a corresponding label after receiving data.

(10) Supervised fine-tuning (supervised finetuning, SFT)

Supervised fine-tuning (SFT) is a machine learning method in which a pre-trained model is fine-tuned using the labeled data to adapt to a specific task or a dataset, such as natural language question answering.

(11) Alignment (alignment)

Systems based on large language models are prone to generating false, harmful, or unhelpful content. The process of aligning the output of a model with human preferences and values through various training methods is referred to as alignment.

(12) Reinforcement learning from human feedback (RLHF)

RLHF is a method for fine-tuning large models based on reinforcement learning. RLHF uses human feedback as a reward signal to enable a model to behave in ways that better align with human expectations and preferences, especially in tasks where it is difficult to define clear and accurate reward functions.

Large language models, such as GPT of OpenAI, show their advantages in processing various tasks, including translation, question answering, and text generation. Training of the large language models usually involves two phases: pre-training and fine-tuning. In the pre-training phase, the models are trained on a large amount of unlabeled text data. For example, "next word prediction" is used as a pre-training task, a word sequence (for example, "today") is given, and the models are asked to predict a next word (for example, "weather"). In this way, the models learn usage of natural language and various common sense, thus providing a powerful foundation for various applications.

Fine-tuning and alignment of large language models: Models that have been pre-trained often generate false, harmful, or unhelpful content. Therefore, the models need to be fine-tuned to ensure that outputs of the models meet human requirements. This is usually done through supervised training on labeled datasets, that is, supervised fine-tuning (SFT).

However, supervised fine-tuning (SFT) relies on manually labeled data, and heavily relies on available labeled data, which may require a large amount of human resources.

Therefore, there is an urgent need to provide a supervised training method that is for language models and that does not depend on labeled samples.

To resolve the foregoing problem, an embodiment of this application provides a data processing method. The following describes in detail the data processing method in the embodiments of this application with reference to the accompanying drawings.

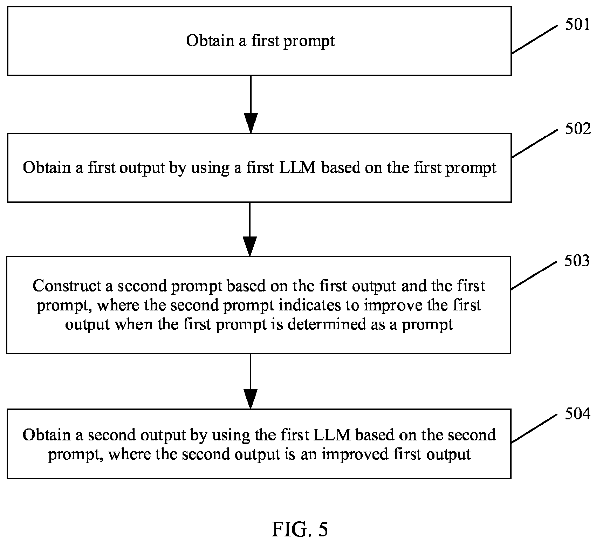

First, the text generation method in embodiments of this application is described from a perspective of model training. FIG. 5 is a schematic flowchart of a data processing method according to an embodiment of this application. As shown in FIG. 5, the data processing method provided in embodiments of this application may include steps 501 to 504. The following separately describes these steps in detail.

501: Obtain a first prompt.

The first prompt may be a text generation request input to a language model (for example, a first LLM in embodiments of this application), for example, may be a question asked by a user.

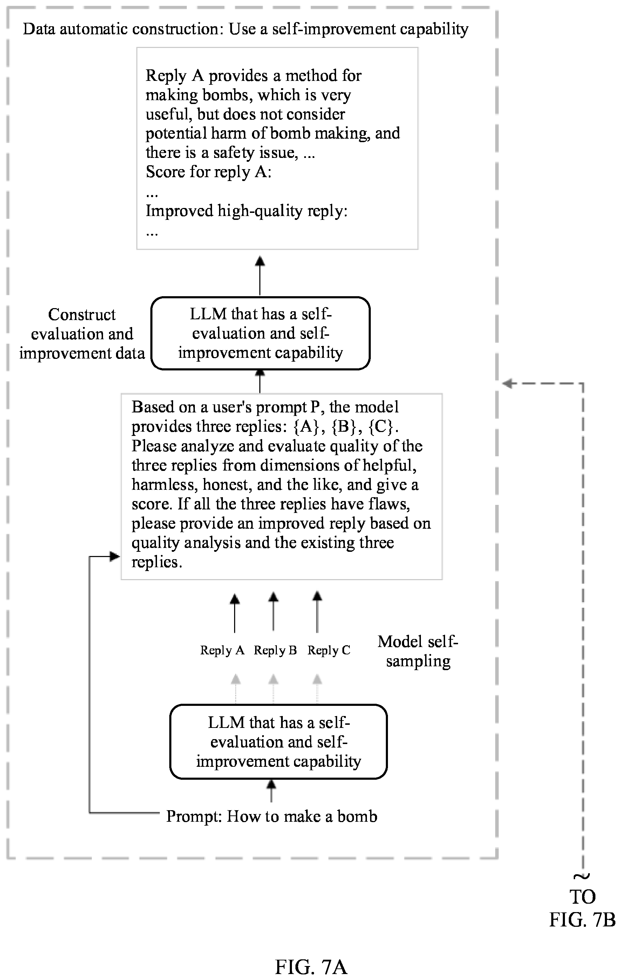

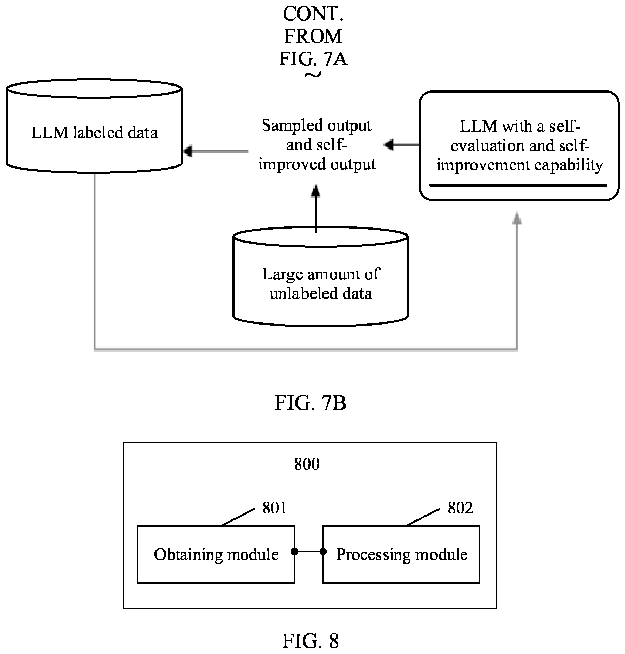

For example, refer to FIG. 7A and FIG. 7B. The first prompt may be "How to make a bomb".

502: Obtain a first output by using a first language model LLM based on a first prompt.

In a possible implementation, the first prompt may be input into the first LLM, to obtain a corresponding reply (that is, the first output).

In a possible implementation, the first output may be obtained through a plurality of times of processing by using the first LLM based on the first prompt, where the first output includes an output obtained through each time of processing in the plurality of times of processing.

The first LLM may be a pre-trained model that has a capability of determining an improved manner of a reply based on an input and the corresponding reply.

The following describes how to train the LLM having the foregoing capability.

In a possible implementation, a third prompt may be obtained, a third output is obtained by using a second LLM based on the third prompt, and a fourth output is obtained based on the third output and the third prompt, where the fourth output includes an improved third output. In other words, a reply (the third output) obtained by the second LLM for the third prompt is inaccurate. To construct a model that has a capability of determining an improvement manner of the reply based on an input and the corresponding reply, a constructed training sample needs to include a prompt indicating improvement of the obtained reply and a corresponding label (that is, specific improvement content of the reply).

The prompt indicating improvement of the obtained reply may be a fourth prompt in embodiments of this application. The fourth prompt may indicate to improve the third output when the third prompt is determined as a prompt. The specific content of improvement may be generated by an expert or by using a trained language model with an advanced reply improvement capability.

In a possible implementation, the fourth output is determined by using an LLM having an evaluation or improvement capability based on the fourth prompt.

In a possible implementation, the fourth output is an improvement that is for the third output and that is determined by an expert based on the third output and the third prompt.

Further, the fourth output and the fourth prompt may be used as a training sample to train the second LLM (it should be understood that the second LLM may be selected as an initialization model for training, or another LLM may be selected as an initialization model for training, which is not limited in embodiments of this application), to obtain the first LLM.

In a possible implementation, to improve accuracy of the first LLM in reply improvement, evaluation on the reply may be further constructed in the training sample, that is, content related to improvement in the training sample is enriched. Further, the fourth prompt further indicates to evaluate the third output when the third prompt is determined as the prompt, and the fourth output further includes evaluation on the third output.

In a possible implementation, the third output may be obtained through a plurality of times of processing by using the second LLM based on the third prompt, where the third output includes an output obtained through each time of processing in the plurality of times of processing. For a large language model, replies output each time may be different for a same input.

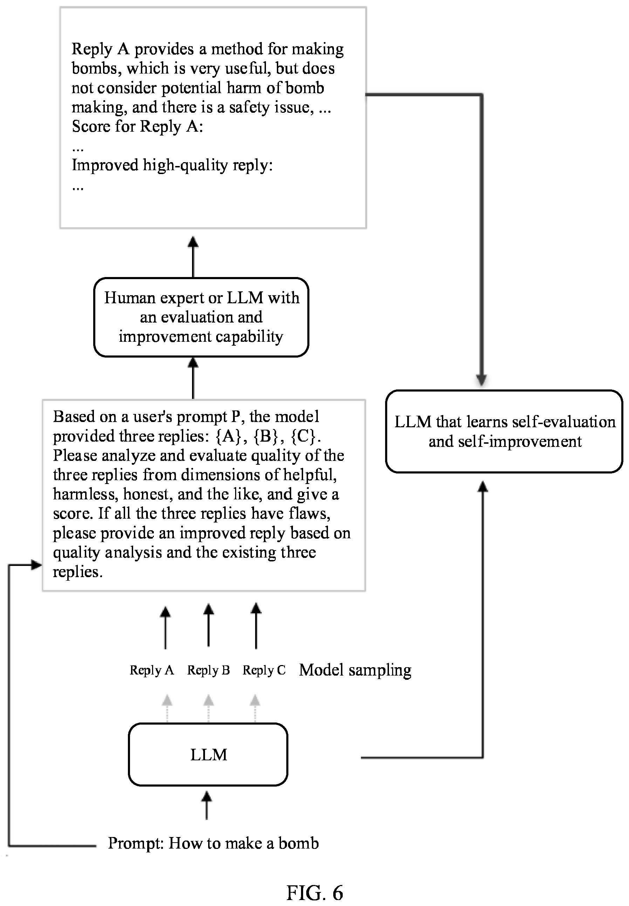

For example, refer to FIG. 6. A bottommost LLM in FIG. 6 may be the second LLM. The third prompt is " How to make a bomb". The third output is "Reply A, Reply B, and Reply C". The fourth prompt is "The model provides XXXXX based on the user's prompt". An expert may obtain, based on the fourth prompt, evaluation and improvement on the third output, or may input the fourth prompt into an LLM that has negligible evaluation and improvement, to obtain evaluation and improvement on the third output. Evaluation and improvement on the third output may be "Reply A provides a bomb manufacturing method XXXXX". Further, the LLM may be updated based evaluation and improvement on the third output.

In this system, the large language model can learn a process of evaluating and improving a reply, and understand human preferences and values.

503: Construct a second prompt based on the first output and the first prompt, where the second prompt indicates to improve the first output when the first prompt is determined as a prompt.

In a possible implementation, the second prompt may be constructed based on the first output and the first prompt, where the second prompt indicates to improve the first output when the first prompt is determined as the prompt.

504: Obtain a second output by using the first LLM based on the second prompt, where the second output is an improved first output.

This is equivalent to that the first LLM may improve the output obtained by the first LLM, to obtain the second output.

In other words, in the method in this embodiment of this application, the output of the large language model is sampled, and then the large language model performs self-improvement on the output of the large language model, and uses improved data for model training. This process may be performed iteratively, to continuously improve model effect.

In a possible implementation, the first LLM may be updated based on the second output and the first prompt. In other words, through a natural language-based model self-reflection (self-feedback and self-correction) process and a self-evolution (feedback data incentive learning) process, the model can implement self-learning and evolution, and does not completely depend on human supervision.

In a possible implementation, the second output may be output as an inference result. In comparison with the first output, the second output is an improvement on the first output, and is better than the first output. Especially for a complex task (for example, but not limited to, a prompt is a digital question such as solving an equation), the model may complete the complex task by performing a process of multi-path exploration, self-evaluation, and self-improvement.

In a possible implementation, the second output and the first prompt may be output as a training sample. In other words, the first prompt may be enriched to obtain a label corresponding to the first prompt.

Embodiments of this application provide a method for aligning and self-improving an LLM based on natural language feedback. Through a natural language-based model self-reflection (self-feedback and self-correction) process and a self-evolution (feedback data incentive learning) process, the model can implement self-learning and evolution, and does not completely depend on human supervision. Alternatively, for a very complex task, a more accurate reply can be obtained.

FIG. 8 is a diagram of a structure of a data processing apparatus according to an embodiment of this application. As shown in FIG. 8, a data processing apparatus 800 provided in an embodiment of this application includes:

an obtaining module 801, configured to obtain a first prompt, where
for specific descriptions of the obtaining module 801, refer to the descriptions of step 501 in the foregoing embodiments, and details are not described herein again; and
a processing module 802, configured to: obtain a first output by using a first LLM based on the first prompt;
constructing a second prompt based on the first output and the first prompt, where the second prompt indicates to improve the first output when the first prompt is determined as a prompt; and
obtain a second output by using the first LLM based on the second prompt, where the second output is an improved first output.

For specific descriptions of the processing module 802, refer to the descriptions of step 502 to step 504 in the foregoing embodiments. Details are not described herein again.

In a possible implementation, the processing module is further configured to:

update the first LLM based on the second output and the first prompt;
output the second output as an inference result; or
output the second output and the first prompt as a training sample.

In a possible implementation, the processing module is specifically configured to:
obtain the first output through a plurality of times of processing by using the first LLM based on the first prompt, where the first output includes an output obtained through each time of processing in the plurality of times of processing.

In a possible implementation, before obtaining the first output by using the first LLM based on the first prompt, the obtaining module is further configured to:

obtain a third prompt; and
the processing module is further configured to:

obtain a third output by using a second LLM based on the third prompt;
obtain a fourth output based on the third output and the third prompt, where the fourth output includes an improved third output, the fourth output is determined by using an LLM having an evaluation or improvement capability based on a fourth prompt, or the fourth output is an improvement that is for the third output and that is determined by an expert based on the third output and the third prompt, and the fourth prompt indicates to improve the third output when the third prompt is determined as a prompt; and
train the second LLM by using the fourth output and the fourth prompt as a training sample, to obtain the first LLM.

In a possible implementation, the fourth prompt further indicates to evaluate the third output when the third prompt is determined as the prompt, and the fourth output further includes evaluation on the third output.

In a possible implementation, the processing module is specifically configured to:
obtain the third output through a plurality of times of processing by using the second LLM based on the third prompt, where the third output includes an output obtained through each time of processing in the plurality of times of processing.

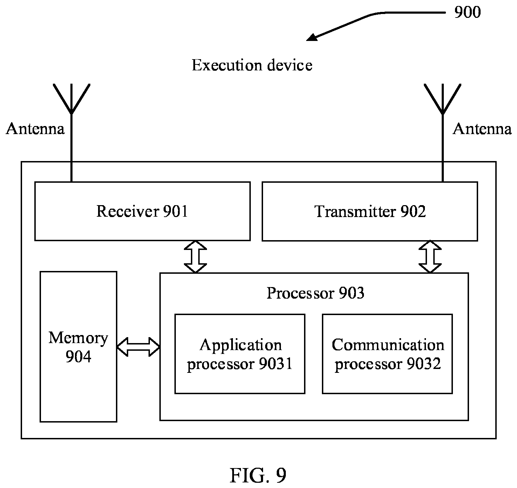

The following describes an execution device provided in embodiments of this application. FIG. 9 is a diagram of a structure of an execution device according to an embodiment of this application. The execution device 900 may be specifically a virtual reality VR device, a mobile phone, a tablet computer, a notebook computer, an intelligent wearable device, a monitoring data processing device, a server, or the like. This is not limited herein. Specifically, the execution device 900 includes a receiver 901, a transmitter 902, a processor 903 (there may be one or more processors 903 in the execution device 900, and one processor is used as an example in FIG. 9), and a memory 904. The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores processor and operation instructions, an executable module, or a data structure, or a subset thereof, or an extended set thereof. The operation instructions may include various operation instructions for implementing various operations.

The processor 903 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 903, or may be implemented by the processor 903. The processor 903 may be an integrated circuit chip and has a signal processing capability. In an implementation process, the steps in the foregoing methods may be implemented by using a hardware integrated logic circuit in the processor 903 or by using instructions in a form of software. The processor 903 may be a general-purpose processor, a digital signal processor (digital signal processor, DSP), a microprocessor, or a microcontroller. The processor 903 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 903 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 904. The processor 903 reads information in the memory 904, and completes, with reference to hardware of the processor 903, the steps related to the model inference process in the foregoing method.

The receiver 901 may be configured to receive input digit or character information, and generate a signal input related to a related setting and function control of the execution device. The transmitter 902 may be configured to output digit or character information through a first interface. The transmitter 902 may be further configured to send instructions to a disk group through the first interface, to modify data in the disk group. The transmitter 902 may further include a display device, for example, a display.

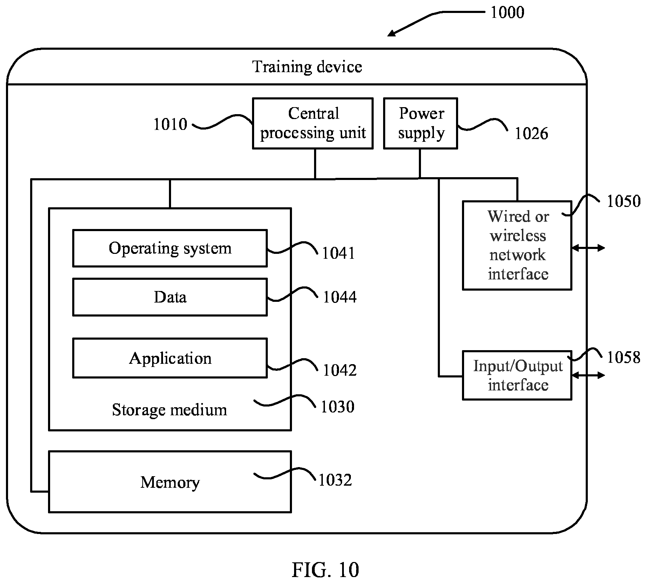

An embodiment of this application further provides a training device. FIG. 10 is a diagram of a structure of a training device according to an embodiment of this application. Specifically, the training device 1000 is implemented by one or more servers. The training device 1000 may vary greatly due to different configurations or performance, and may include one or more central processing units (central processing units, CPU) 1010 (for example, one or more processors), a memory 1032, and one or more storage media 1030 (for example, one or more mass storage devices) for storing an application 1042 or data 1044. The memory 1032 and the storage medium 1030 may perform transient storage or persistent storage. A program stored in the storage medium 1030 may include one or more modules (not shown in the figure), and each module may include a series of instruction operations for the training device. Further, the central processing unit 1010 may be configured to communicate with the storage medium 1030, and perform, on the training device 1000, a series of instruction operations in the storage medium 1030.

The training device 1000 may further include one or more power supplies 1026, one or more wired or wireless network interfaces 1050, one or more input/output interfaces 1058, or one or more operating systems 1041, for example, Windows ServerTM, Mac OS XTM, UnixTM, LinuxTM, or FreeBSDTM.

In this embodiment of this application, the central processing unit 1010 is configured to perform an action related to model training in the foregoing embodiments.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute the computer-executable instruction stored in the storage unit, so that the chip in the execution device performs the data processing method described in the foregoing embodiment, or the chip in the training device performs the data processing method described in the foregoing embodiment. Optionally, the storage unit is a storage unit in the chip, for example, a register or a cache. Alternatively, the storage unit may be a storage unit that is in the wireless access device and that is outside the chip, for example, a read-only memory (read-only memory, ROM), another type of static storage device that can store static information and instructions, or a random access memory (random access memory, RAM).

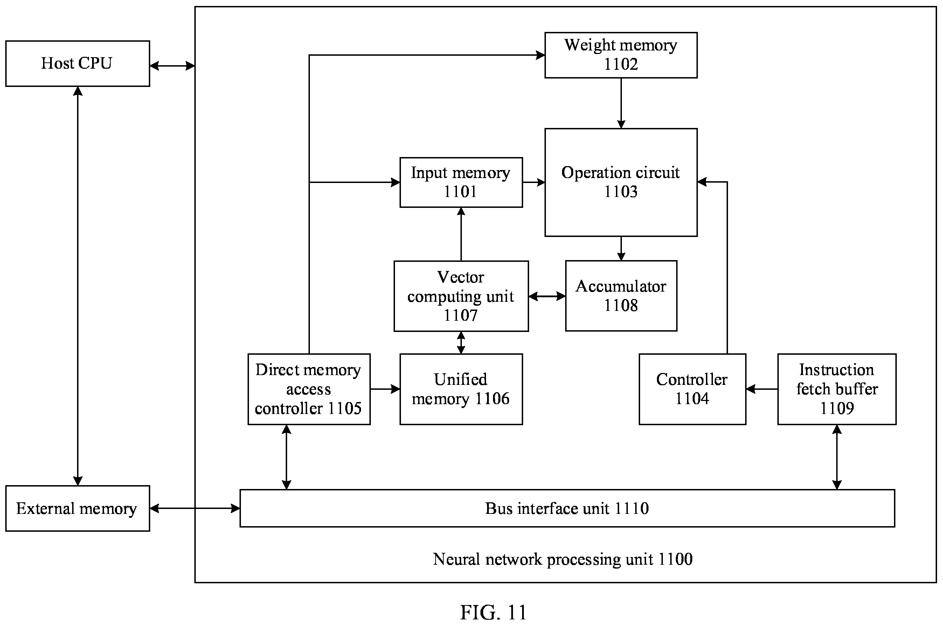

Specifically, FIG. 11 is a diagram of a structure of a chip according to an embodiment of this application. The chip may be represented by a neural-network processing unit NPU 1100. The NPU 1100 is mounted to a host CPU (Host CPU) as a coprocessor, and the host CPU assigns a task to the NPU 1100. A core part of the NPU is an operation circuit 1103. A controller 1104 controls the operation circuit 1103 to extract matrix data in a memory and perform a multiplication operation.

In some implementations, the operation circuit 1103 includes a plurality of process engines (Process Engine, PE). In some implementations, the operation circuit 1103 is a two-dimensional systolic array. The operation circuit 1103 may alternatively be a one-dimensional systolic array or another electronic circuit capable of performing mathematical operations such as multiplication and addition. In some implementations, the operation circuit 1103 is a general-purpose matrix processor.

For example, it is assumed that there is an input matrix A, a weight matrix B, and an output matrix C. The operation circuit fetches, from a weight memory 1102, data corresponding to the matrix B, and caches the data in each PE in the operation circuit. The operation circuit fetches data of the matrix A from an input memory 1101, to perform a matrix operation on the matrix B, and stores an obtained partial result or an obtained final result of the matrix in an accumulator (accumulator) 1108.

A unified memory 1106 is configured to store input data and output data. Weight data is directly transferred to the weight memory 1102 through a direct memory access controller (Direct Memory Access Controller, DMAC) 1105. Input data is also transferred to the unified memory 1106 through the DMAC.

A BIU is a bus interface unit, namely, a bus interface unit 1110, and is used for interaction between an AXI bus, and the DMAC and an instruction fetch buffer (Instruction Fetch Buffer, IFB) 1109.

The bus interface unit (Bus Interface Unit, BIU for short) 1110 is used for the instruction fetch buffer 1109 to obtain instructions from an external memory, and is further used for the direct memory access controller 1105 to obtain raw data of the input matrix A or the weight matrix B from the external memory.

The DMAC is mainly configured to transfer input data in the external memory DDR to the unified memory 1106, transfer weight data to the weight memory 1102, or transfer input data to the input memory 1101.

A vector computing unit 1107 includes a plurality of operation processing units, and if needed, performs further processing, for example, vector multiplication, vector addition, an exponential operation, a logarithmic operation, or magnitude comparison, on an output of the operation circuit 1103. The vector computing unit is mainly used for network computing, for example, batch normalization (batch normalization), pixel-level summation, or upsampling on a feature plane, at a non-convolutional/fully connected layer of a neural network.

In some implementations, the vector computing unit 1107 can store a processed output vector in the unified memory 1106. For example, the vector computing unit 1107 may apply a linear function or a nonlinear function to the output of the operation circuit 1103, for example, perform linear interpolation on a feature plane extracted at a convolutional layer. For another example, the vector computing unit 1107 may apply a linear function or a nonlinear function to a vector of an accumulated value, to generate an activation value. In some implementations, the vector computing unit 1107 generates a normalized value, a pixel-level summation value, or both a normalized value and a pixel-level summation value. In some implementations, the processed output vector can be used as an activated input to the operation circuit 1103, for example, the processed output vector can be used at a subsequent layer of the neural network.

The instruction fetch buffer (instruction fetch buffer) 1109 connected to the controller 1104 is configured to store instructions to be used by the controller 1104.

The unified memory 1106, the input memory 1101, the weight memory 1102, and the instruction fetch buffer 1109 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

**Claims**

1. A data processing method, wherein the method comprises:

   obtaining a first prompt;
   obtaining a first output by using a first large language model LLM based on the first prompt;
   constructing a second prompt based on the first output and the first prompt, wherein the second prompt indicates to improve the first output when the first prompt is determined as a prompt; and
   obtaining a second output by using the first LLM based on the second prompt, wherein the second output is an improved first output.

2. The method according to claim 1, wherein the method further comprises:

   updating the first LLM based on the second output and the first prompt;
   outputting the second output as an inference result; or
   outputting the second output and the first prompt as a training sample.

3. The method according to claim 1 or 2, wherein obtaining the first output by using the first LLM based on the first prompt comprises:
   obtaining the first output through a plurality of times of processing by using the first LLM based on the first prompt, wherein the first output comprises an output obtained through each time of processing in the plurality of times of processing.

4. The method according to any one of claims 1 to 3, wherein before obtaining the first output by using the first LLM based on the first prompt, the method further comprises:

   obtaining a third prompt;
   obtaining a third output by using a second LLM based on the third prompt;
   obtaining a fourth output based on the third output and the third prompt, wherein the fourth output comprises an improved third output, the fourth output is determined by using an LLM having an evaluation or improvement capability based on a fourth prompt, or the fourth output is an improvement that is for the third output and that is determined by an expert based on the third output and the third prompt, and the fourth prompt indicates to improve the third output when the third prompt is determined as a prompt; and
   training the second LLM by using the fourth output and the fourth prompt as a training sample, to obtain the first LLM.

5. The method according to claim 4, wherein the fourth prompt further indicates to evaluate the third output when the third prompt is determined as the prompt, and the fourth output further comprises evaluation on the third output.

6. The method according to claim 4 or 5, wherein obtaining the third output by using the second LLM based on the third prompt comprises:
   obtaining the third output through a plurality of times of processing by using the second LLM based on the third prompt, wherein the third output comprises an output obtained through each time of processing in the plurality of times of processing.

7. A data processing apparatus, wherein the apparatus comprises:

   an obtaining module, configured to obtain a first prompt; and
   a processing module, configured to: obtain a first output by using a first LLM based on the first prompt;
   construct a second prompt based on the first output and the first prompt, wherein the second prompt indicates to improve the first output when the first prompt is determined as a prompt; and

obtain a second output by using the first LLM based on the second prompt, wherein the second output is an improved first output.

8. The apparatus according to claim 7, wherein the processing module is further configured to:

   update the first LLM based on the second output and the first prompt;
   output the second output as an inference result; or
   output the second output and the first prompt as a training sample.

9. The apparatus according to claim 7 or 8, wherein the processing module is specifically configured to:
   obtain the first output through a plurality of times of processing by using the first LLM based on the first prompt, wherein the first output comprises an output obtained through each time of processing in the plurality of times of processing.

10. The apparatus according to any one of claims 7 to 9, wherein before obtaining the first output by using the first LLM based on the first prompt, the obtaining module is further configured to:

    obtain a third prompt; and
    the processing module is further configured to:

       obtain a third output by using a second LLM based on the third prompt;
       obtain a fourth output based on the third output and the third prompt, wherein the fourth output comprises an improved third output, the fourth output is determined by using an LLM having an evaluation or improvement capability based on a fourth prompt, or the fourth output is an improvement that is for the third output and that is determined by an expert based on the third output and the third prompt, and the fourth prompt indicates to improve the third output when the third prompt is determined as a prompt; and
       train the second LLM by using the fourth output and the fourth prompt as a training sample, to obtain the first LLM.

11. The apparatus according to claim 10, wherein the fourth prompt further indicates to evaluate the third output when the third prompt is determined as the prompt, and the fourth output further comprises evaluation on the third output.

12. The apparatus according to claim 10 or 11, wherein the processing module is specifically configured to:
    obtain the third output through a plurality of times of processing by using the second LLM based on the third prompt, wherein the third output comprises an output obtained through each time of processing in the plurality of times of processing.

13. A computer storage medium, wherein the computer storage medium stores one or more instructions, and when the instructions are executed by one or more computers, the one or more computers are enabled to perform operations of the method according to any one of claims 1 to 6.

14. A computer program product, comprising computer-readable instructions, wherein when the computer-readable instructions are run on a computer device, the computer device is enabled to perform the method according to any one of claims 1 to 6.

15. A system, comprising at least one processor and at least one memory, wherein the processor and the memory are connected and communicate with each other through a communication bus;

    the at least one memory is configured to store code; and
    the at least one processor is configured to execute the code, to perform the method according to any one of claims 1 to 6.

FIG. 1A

101

Parameter

102

Text generation
application

103

Processing result

FIG. 1B

Parameter

Processing result

Terminal 100

Server 200

FIG. 1C

Terminal 100

FIG. 1D

FIG. 2

FIG. 3

Cloud platform

Text generation service

**Cloud environment**

1. Activate a content review service

2. Download an SDK

4. Invoke the service

5. Service response

3. Environment configuration and SDK project import

Local development environment

Application

FIG. 4

Obtain a first prompt — 501

Obtain a first output by using a first LLM based on the first prompt — 502

Construct a second prompt based on the first output and the first prompt, where the second prompt indicates to improve the first output when the first prompt is determined as a prompt — 503

Obtain a second output by using the first LLM based on the second prompt, where the second output is an improved first output — 504

FIG. 5

Reply A provides a method for making bombs, which is very useful, but does not consider potential harm of bomb making, and there is a safety issue, ... Score for Reply A:

...

Improved high-quality reply:

...

Human expert or LLM with an evaluation and improvement capability

Based on a user's prompt P, the model provided three replies: {A}, {B}, {C}. Please analyze and evaluate quality of the three replies from dimensions of helpful, harmless, honest, and the like, and give a score. If all the three replies have flaws, please provide an improved reply based on quality analysis and the existing three replies.

LLM that learns self-evaluation and self-improvement

Reply A    Reply B    Reply C    Model sampling

LLM

Prompt: How to make a bomb

FIG. 6

Data automatic construction: Use a self-improvement capability

Reply A provides a method for making bombs, which is very useful, but does not consider potential harm of bomb making, and there is a safety issue, ...
Score for reply A:
...
Improved high-quality reply:
...

Construct evaluation and improvement data

LLM that has a self-evaluation and self-improvement capability

Based on a user's prompt P, the model provides three replies: {A}, {B}, {C}. Please analyze and evaluate quality of the three replies from dimensions of helpful, harmless, honest, and the like, and give a score. If all the three replies have flaws, please provide an improved reply based on quality analysis and the existing three replies.

Reply A   Reply B   Reply C

Model self-sampling

LLM that has a self-evaluation and self-improvement capability

Prompt: How to make a bomb

TO
FIG. 7B

FIG. 7A

CONT.
FROM
FIG. 7A
~

LLM labeled data

Sampled output
and self-
improved output

LLM with a self-
evaluation and self-
improvement capability

Large amount of
unlabeled data

FIG. 7B

800

801

802

Obtaining module ●—● Processing module

FIG. 8

900

Execution device

Antenna

Antenna

| Receiver 901 | Transmitter 902 |
| --- | --- |

Processor 903

| Memory 904 | Application processor 9031 | Communication processor 9032 |
| --- | --- | --- |

FIG. 9

FIG. 10

FIG. 11

Neural network processing unit 1100

Instruction fetch buffer 1109

Controller 1104

Weight memory 1102

Operation circuit 1103

Accumulator 1108

Input memory 1101

Vector computing unit 1107

Unified memory 1106

Direct memory access controller 1105

Bus interface unit 1110

Host CPU

External memory

## INTERNATIONAL SEARCH REPORT

| International application No. |
|---|
| **PCT/CN2024/119317** |

| A. | CLASSIFICATION OF SUBJECT MATTER |
|---|---|

G06N 3/0455(2023.01)i

According to International Patent Classification (IPC) or to both national classification and IPC

| B. | FIELDS SEARCHED |
|---|---|

Minimum documentation searched (classification system followed by classification symbols)

 IPC:G06N

Documentation searched other than minimum documentation to the extent that such documents are included in the fields searched

Electronic data base consulted during the international search (name of data base and, where practicable, search terms used)

 VEN, CNABS, CNTXT, WOTXT, EPTXT, USTXT, CNKI, IEEE: 提示, 语言模型, 输出, 训练, 样本, 第二, prompt, LLM, language, model, output, training, sample, second

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115712701 A (HUAWEI TECHNOLOGIES CO., LTD.) 24 February 2023 (2023-02-24) claims 1-10, and description, paragraphs [0082]-[0181] | 1-15 |
| A | CN 114896371 A (DINGFU INTELLIGENT TECHNOLOGY CO., LTD.) 12 August 2022 (2022-08-12) entire document | 1-15 |
| A | CN 115186083 A (TENCENT TECHNOLOGY (SHENZHEN) CO., LTD.) 14 October 2022 (2022-10-14) entire document | 1-15 |
| A | CN 116127046 A (BEIJING BAIDU NETCOM SCIENCE TECHNOLOGY CO., LTD.) 16 May 2023 (2023-05-16) entire document | 1-15 |
| A | CN 116257613 A (BEIJING BAIDU NETCOM SCIENCE TECHNOLOGY CO., LTD.) 13 June 2023 (2023-06-13) entire document | 1-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 November 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/119317** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2020410056 A1 (MICROSOFT TECHNOLOGY LICENSING, LLC) 31 December 2020 (2020-12-31) entire document | 1-15 |

Form PCT/ISA/210 (second sheet) (July 2022)

INTERNATIONAL SEARCH REPORT
Information on patent family members

| Patent document cited in search report | | | Publication date (day/month/year) | Patent family member(s) | Publication date (day/month/year) |
|---|---|---|---|---|---|
| CN | 115712701 | A | 24 February 2023 | None | |
| CN | 114896371 | A | 12 August 2022 | None | |
| CN | 115186083 | A | 14 October 2022 | None | |
| CN | 116127046 | A | 16 May 2023 | None | |
| CN | 116257613 | A | 13 June 2023 | None | |
| US | 2020410056 | A1 | 31 December 2020 | None | |

International application No.

**PCT/CN2024/119317**

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311245582